# EUROPÄISCHE PATENTSCHRIFT

(11) **EP 0 976 316 B1**
(45) Veröffentlichungstag und Bekanntmachung des Hinweises auf die Patenterteilung: **12.03.2003**
(21) Anmeldenummer: 99113127.7
(22) Anmeldetag: 07.07.1999
(51) Int. Cl.: A01D 45/02

(54) **Vorrichtung zum Ernten von stengeligem Erntegut**
Device for harvesting stalk crops
Dispositif à récolter des récoltes à tiges

(30) Priorität: 29.07.1998 DE 19834248
(43) Veröffentlichungstag der Anmeldung: 02.02.2000
(73) Patentinhaber: CLAAS Saulgau GmbH, 88340 Bad Saulgau (DE)
(72) Erfinder: Boll, Ulrich, 88348 Saulgau (DE)

(56) Entgegenhaltungen:
- EP-A- 0 095 435
- EP-A- 0 852 109
- FR-A- 1 295 640
- FR-A- 1 334 163
- US-A- 1 717 305
- US-A- 2 899 794
- US-A- 2 927 414
- US-A- 3 759 021
- US-A- 4 845 930

## Beschreibung

Die Erfindung betrifft eine Vorrichtung zum Ernten von stengeligem Erntegut, wie Mais oder dergleichen, gemäß dem Oberbegriff des Patentanspruchs 1.

Stellvertretend für den umfangreichen Stand der Technik sei an dieser Stelle auf die DE-OS 38 38 979 und die DE 43 44 669 verwiesen, in denen derartige Vorrichtungen zum Ernten von stengeligem Gut offenbart sind, deren Pflückeinheiten aus wenigstens einer Einzugs- und Pflückwalze bestehen, die unterhalb eines Pflückspaltes adaptiert ist, wobei dem Pflückspalt mit Mitnehmern versehene, als Förderketten ausgeführte guttransportierende Förderelemente zugeordnet sind. Damit ein Ausweichen der fördernden Trums der Ketten vermieden wird, sind den Ketten Führungselemente zugeordnet, die wenigstens teilweise die umlaufenden Ketten berühren und lösbar an einem gemeinsamen Grundkörper angeordnet sind (Prospekt Maispflücker der Fa. CLAAS, Druckvermerk 190.146.1). Zur Kompensation der allmählich auftretenden Kettendehnung sind die Förderketten mit Spanneinrichtungen versehen, die im allgemeinen gegen die Wirkung einer Feder ein Spannen der Förderketten ermöglichen. Damit stets ein sicherer Stengeleinzug gewährleistet wird, sind die Pflückspalte jeder Pflückeinheit innerhalb eines bestimmten Bereiches auf den Stengeldurchmesser des Erntegutes einstellbar, wobei in der Regel eine der Pflückspalt-bildenden Pflückplatten ortsfest, die andere über hydraulische oder mechanische Verstellmechanismen in ihrer Lage quer zur Fahrtrichtung verstellbar ist. Die Führungselemente der Ketten, die Kettenspanneinrichtungen und die den Verstellmechanismus der Pflückplatten aufnehmenden Teile sind im wesentlichen als Blechbiege- und -schweißteile ausgeführt, die, einen hohen Montageaufwand verursachend, lösbar an einem gemeinsamen Grundkörper adaptiert sind. Wesentliche Nachteile derartig ausgeführter Pflückeinheiten sind neben der zum Teil schlechten Zugänglichkeit der Schraubverbindungen bei der Montage oder bei beschädigungsbedingten Reparaturen die große Anzahl der erforderlichen Einzelteile und die sich daraus ergebende große Masse des Vorsatzgerätes.

Der Erfindung liegt deshalb die Aufgabe zugrunde, eine Vorrichtung zum Ernten von stengeligem Erntegut gemäß dem Oberbegriff des Anspruchs 1 so zu gestalten, daß die Führungselemente der Ketten, die Führung der Kettenspanneinrichtungen und die den Verstellmechanismus der Pflückplatten aufnehmende Führung den Montageaufwand und die Anzahl der Einzelteile reduzierend ausgeführt sind, wodurch neben kürzeren Montage- und reparaturbedingten Ausfallzeiten eine Massereduzierung des gesamten Vorsatzgerätes erreicht wird.

Erfindungsgemäß wird die Aufgabe durch eine Vorrichtung zum Ernten von stengeligem Erntegut mit den kennzeichnenden Merkmalen des Anspruchs 1 gelöst.

Dadurch, daß die Führung des Zugmittels, der verstellbaren Pflückspaltplatten und der Spanneinrichtung aus einem elastischen, schwingungsdämpfenden Material ist, wird eine erhebliche Massenreduzierung des Vorsatzgerätes und eine Reduzierung von verschleißfördernden Vibrationen erreicht.

In vorteilhafter Weise können die Führungselemente des Zugmittels, die Führung der verstellbaren Pflückspaltplatte und die Führung der Spanneinrichtung in einem einzigen Führungsteil integriert sein, sodaß sich die Anzahl der zu montierenden oder bei Beschädigung auszutauschenden Teile erheblich reduziert.

In einer vorteilhaften Weiterbildung der Erfindung werden für das Zugmittel Umlenkelemente vorgesehen, die entweder teilweise oder vollständig aus elastischem, schwingungsdämpfenden Material bestehen, sodaß neben einer Massenreduzierung eine Verringerung des Herstellungsaufwandes erreicht wird.

Zur Reduzierung des verschleißbedingten Wechsels der Pflückwalzen ist in einer weiteren vorteilhaften Ausgestaltung der erfindungsgemäßen Vorrichtung vorgesehen, den in Fahrtrichtung liegenden Endbereich der Pflückwalzen demontierbar auszuführen und unter dem Gesichtspunkt der Massenreduzierung ebenfalls aus elastischem, schwingungsdämpfenden Material zu fertigen.

Vorteilhafte Ausgestaltungen sind Gegenstand weiterer Unteransprüche und werden nachfolgend anhand eines in Zeichnungen dargestellten Ausführungsbeispiels näher erläutert.

Es zeigen
- Figur 1: eine erfindungsgemäße Vorrichtung in Ansicht von oben

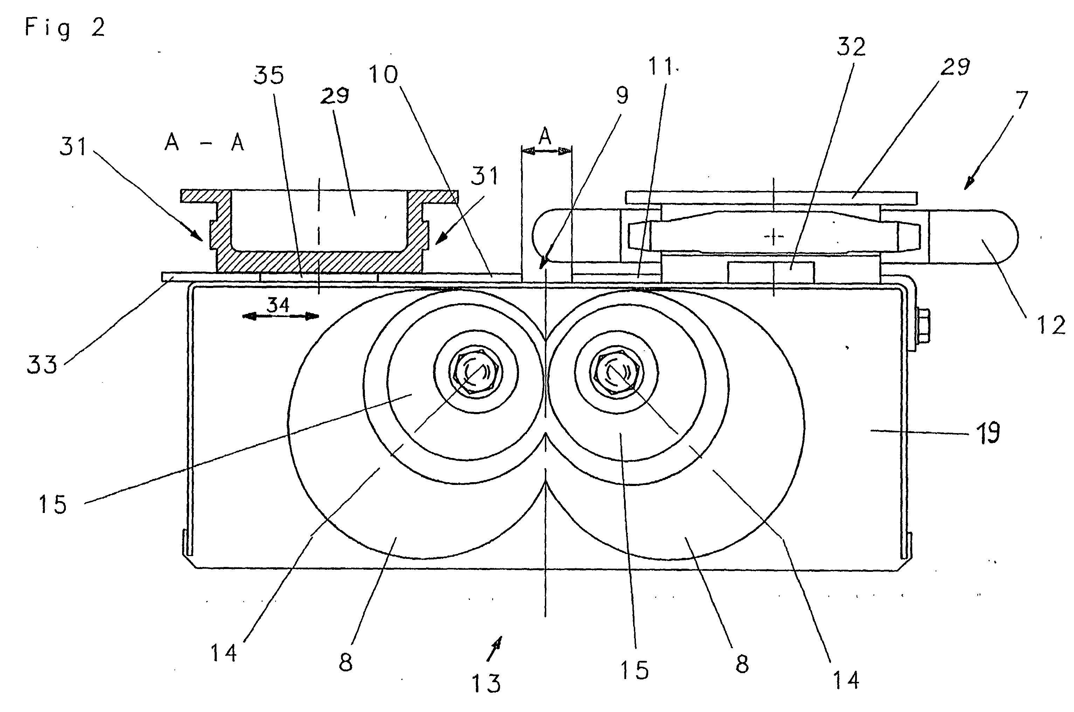

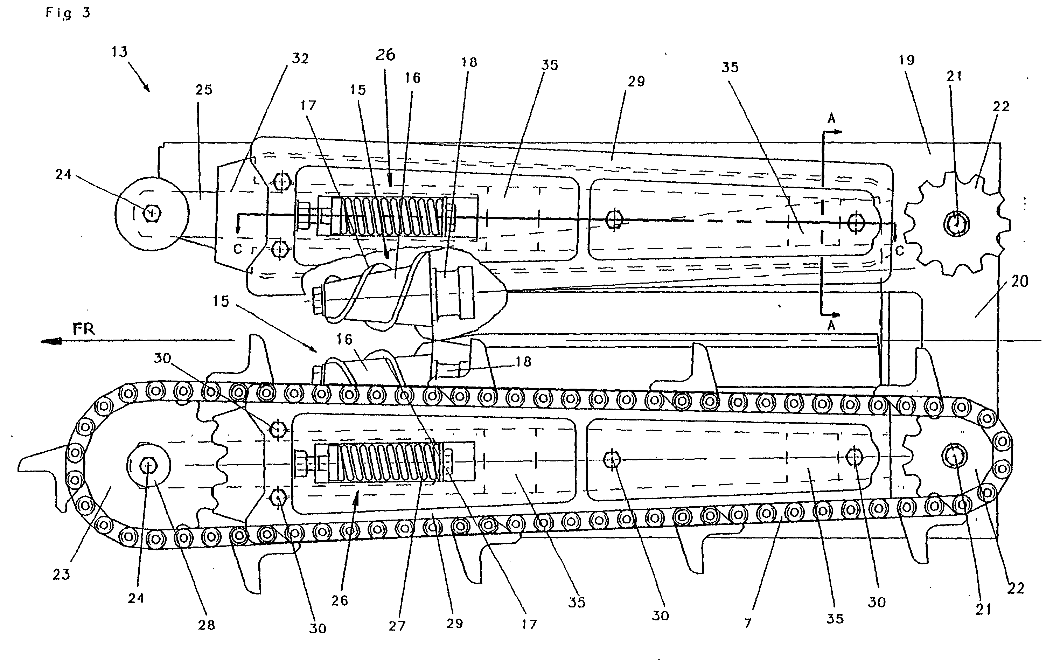

- Figur 2: eine erfindungsgemäße Pflückeinheit in Vorderansicht mit geschnitten dargestelltem Führungsteil entstsprechend Schnittlinie A-A in Figur 3
- Figur 3: eine erfindungsgemäße Pflückeinheit in Ansicht von oben mit eingezeichneten Schnittlinien A-A und C-C

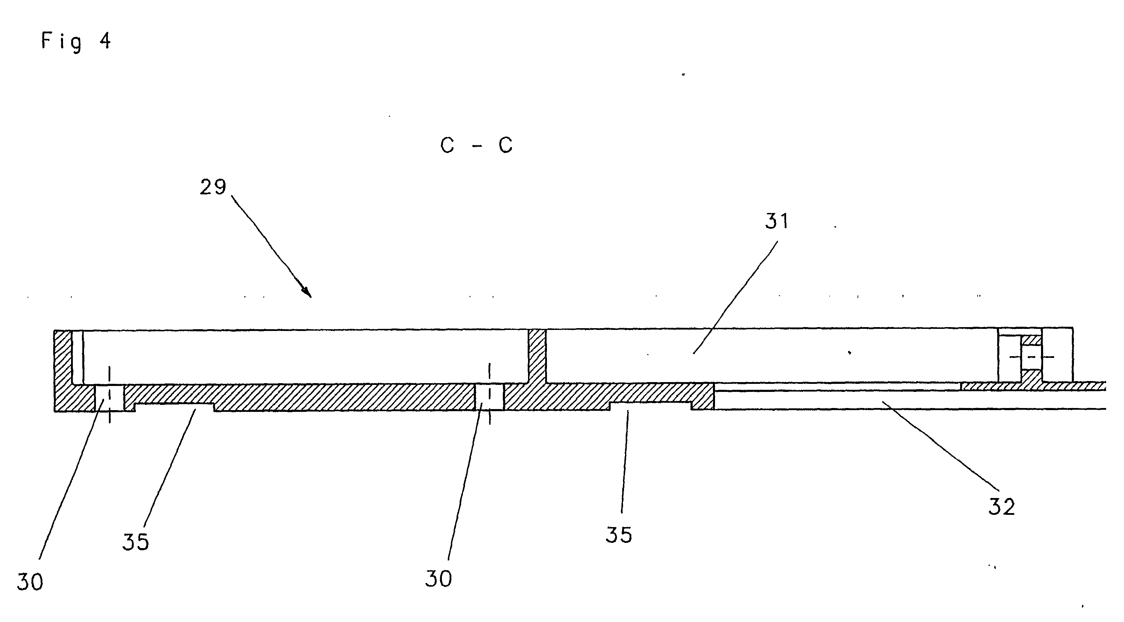

- Figur 4: das erfindungsgemäße Führungsteil im Längsschnitt entsprechend Schnittlinie C-C in Figur 3.

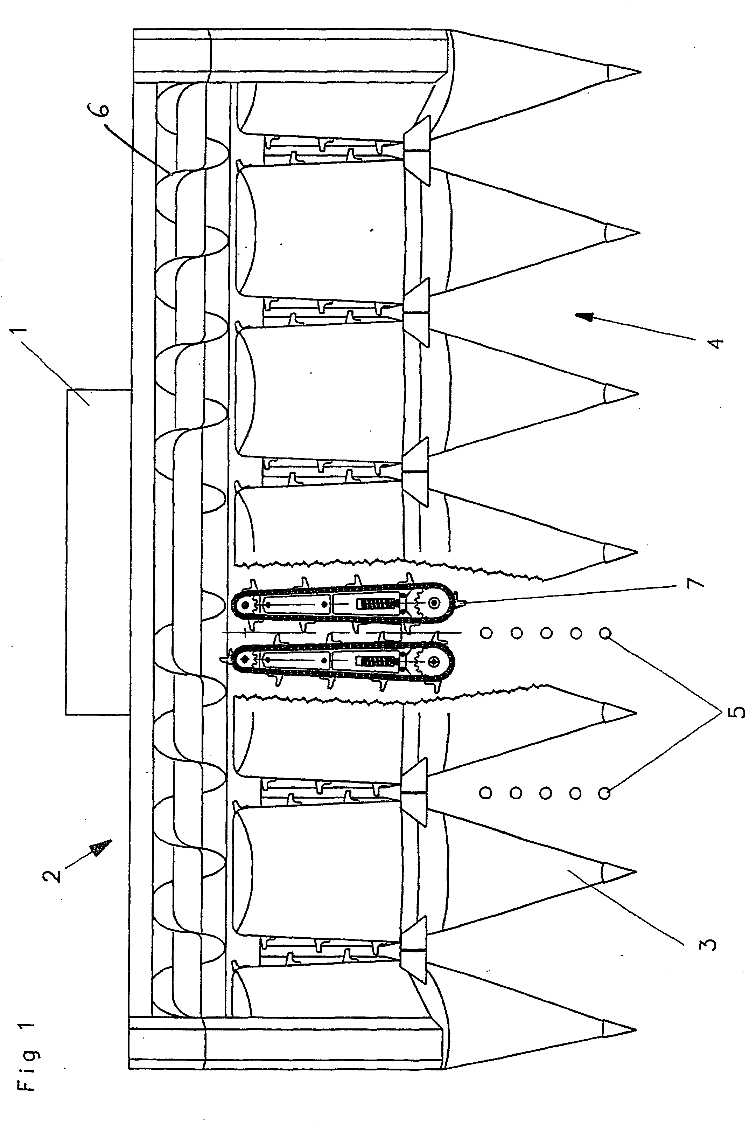

Figur 1 zeigt schematisch eine an einem nicht näher dargestellten Trägerfahrzeug 1 adaptierte als Pflücker ausgeführte erfindungsgemäße Vorrichtung 2 zum Ernten von stengeligem Erntegut, die wenigstens einen, von Abteilern 3 begrenzten sich in Richtung des Trägerfahrzeugs 1 verjüngenden Einzugsbereich 4 aufweist, durch welchen das Erntegut 5 den noch näher zu beschreibenden Pflückorganen zugeführt wird und der in seinem rückwärtigen Bereich eine Querförderschnecke 6 aufweist, die die nicht dargestellten, von den Stengeln 5 gepflückten Fruchtstände mittig im Pflücker 2 zusammenführt und an ebenfalls nicht dargestellte, die Fruchtstände in Richtung Trägerfahrzeug 1 fördernde Transportelemente übergibt. Im Einzugsbereich 4 werden die Stengel 5 durch Förderketten 7 erfaßt und paarweise angeordneten Pflückwalzen 8 zugeführt, die die Stengel 5 in niedriger Höhe über dem Boden abschneiden und den geschnittenen Stengel 5 durch einen Pflückspalt 9 ziehen, wobei die am Stengel 5 befindlichen nicht näher dargestellten Fruchtstände an den Pflückspaltplatten 10, 11 abgestriffen und durch die Mitnahmeelemente 12 der Förderketten 7 in den rückwärtigen Bereich der Pflückwalzen 8 transportiert und dort von einem als Querförderschnecke 6 ausgeführten Querförderorgan mittig zusammengeführt werden. Zur Begünstigung der Stengelverrottung können den Pflückwalzen 8 untenseitig aus dem Stand der Technik bekannte und deshalb nicht näher dargestellte Häckselorgane zugeordnet sein, die die von den Pflückwalzen 8 in diesen Bereich geförderten Stengel 5 zerkleinern. Der erfindungsgemäße Pflükker 2 verfügt über eine Mehrzahl nebeneinander angeordneter, im folgenden näher beschriebene Pflückeinheiten 13, deren äußere Pflückeinheiten 13 zur Einhaltung einer bestimmten Transportbreite in ansich bekannter Weise verschwenkbar am Pflücker 2 angeordnet sein können. Jede Pflückeinheit 13 verfügt über ein zusammenarbeitendes, wenigstens teilweise ineinandergreifendes gegenläufig angetriebenes Pflückwalzenpaar 8, wobei die Pflückwalzenachsen 14 aufeinanderzulaufend oder parallel zueinander angeordnet sein können. Jede Pflückwalze 8 verfügt an ihrem in Fahrtrichtung FR vorn liegenden Ende über eine demontierbare konische Spitze 15, die erfindungsgemäß eine aus einem elastischen, schwingungsdämpfenden Material bestehende Hüllkurve 16 mit schneckenförmige Gutleit- und Förderelemente 17 und zur Montage an den Pflückwalzenachsen 14 einen metallischen Kern 18 aufweist. Trägerfahrzeugseitig münden die Pflückwalzenachsen 14 in einem am tragenden Grundkörper 19 jeder Pflückeinheit 13 angeflanschten Getriebe 20, welches obenseitig über austretende Wellen 21 verfügt, die die als Kettenräder 22 ausgeführten Antriebselemente der Förderketten 7 aufnehmen. Die in Fahrtrichtung FR vorn liegenden Kettenräder 23 der ebenfalls gegenläufig angetriebenen Förderketten 7 jeder Pflückeinheit 13 sind von Achsen 24 durchsetzt, die von einem gabelförmigen Halter 25 lösbar aufgenommen werden, der anderenends mit einer an sich bekannten, auf dem Grundkörper 19 angeordneten Kettenspanneinrichtung 26 verbunden ist, die mittels Druckfeder 27 eine Bewegung des Kettenrades 23 in oder entgegen der Fahrtrichtung FR ermöglicht, sodaß die verschleißbedingte Kettendehnung ausgeglichen werden kann. Die Kettenräder 22, 23 können zur Massenveringerung des Pflückers 2 erfindungsgemäß aus einem elastischen, schwingungsdämpfenden Material bestehen, wobei dieses elastische, schwingungsdämpfende Material entweder direkt wenigstens ein das Kettenrad 7 auf der Achse 24 abstützendes Lager 28 oder die das Kettenrad 22 antreibende Welle 21 umgibt, sodaß zusätzliche, aus dem Stand der Technik bekannte Laufbuchsen entfallen. Zur Vermeidung von funktionsbeeinträchtigenden Querbewegungen der Förderketten 7 ist den Förderketten 7 innenseitig erfindungsgemäß ein aus elastischem, schwingungsdämpfenden Material bestehendes, einstückig ausgeführtes Führungsteil 29 zugeordnet, welches untenseitig mittels Schraubverbindungen 30 lösbar am Grundkörper 19 in einer Lage adaptiert ist, in der Laufflächen 31 des Führungsteils 29 die Innenseiten der Förderketten 7 zwischen den Kettenrädern 22, 23 wenigstens teilweise kontaktieren. Jedes Führungsteil 29 verfügt auf der dem Kettenrad 23 zugewandten Seite über eine Aussparung 32, die von dem mit der Kettenspanneinrichtung 26 verbundenen Halter 25 durchsetzt wird, sodaß die Aussparung 32 die Führung des durch die Kettenspanneinrichtung 26 in und entgegengesetzt zur Fahrtrichtung FR bewegbaren Kettenrades 23 übernimmt. Zur Anpassung des Pflückspaltes 9 an den Durchmesser der Stengel 5 kann wenigstens eine der den Pflückspalt 9 bildenden Pflückplatten 10, 11 quer zur Fahrtrichtung FR verschoben werden, sodaß das Spaltmaß A einstellbar ist. Dabei ist die in ihrer Lage veränderbare Pflückplatte 10 über eine Verlängerung 33 mit einem aus dem Stand der Technik bekannten und deshalb nicht näher dargestellten Verschwenkmechanismus verbunden, über den die Pflückplatte 10 gemäß Pfeilrichtung 34 in ihrer Lage quer zur Fahrtrichtung FR verstellt werden kann. Erfindungsgemäß verfügt das Führungsteil 29 untenseitig im Bereich der Verlängerung 33 der verschiebbaren Pflückplatte 10 über eine quer zur Fahrtrichtung FR verlaufende Aussparung 35 die von der Verlängerung 33 der verschiebbaren Pflückplatte 10 durchsetzt wird und damit deren Führung übernimmt. Anstelle der im Ausführungbeispiel beweglich angeordneten Pflückplatte 10 ist es auch möglich, daß nur die Pflückplatte 11 oder beide Pflückplatten 10, 11 beweglich angeordnet sind, sodaß entweder nur ein Führungsteil 29 oder aber jeweils beide Führungsteile 29 einer Pflückeinheit 13 untenseitig über eine Aussparung 35 verfügen. Auf diese Weise übernimmt das Führungsteil 29 neben der Führung der Kette 7 auch die Führung des in und entgegen der Fahrtrichtung bewegbaren Kettenrades 23 und des Verstellmechanismus 33 der verschiebbaren Pflückplatte 10, sodaß neben der werkstoffbedingt geringeren Masse des Führungsteils 29 eine deutliche Reduzierung von zu montierenden Einzelteilen gegenüber dem Stand der Technik erreicht wird. Die Herstellbarkeit des eine komplexe Form aufweisenden Führungsteils 29 kann zudem durch den Einsatz eines gießbaren Polyamids deutlich vereinfacht werden. Zur Verringerung des Verschleißes vorallem für den Einsatz des elstischen, schwingungsdämpfenden Materials für die Kettenräder (22, 23) kann das elastische, schwingungsdämpfende Material eine harte Oberfläche und einen weichen Kern aufweisen. In einer weitem nicht dargestellten Form kann das Führungsteil 29 durch mehrere Führungsteile 29 ersetzt sein, die jeweils nur einen Teil der Führungselemente 31, 32, 35 aufweisen, sodaß bei betriebsbedingt auftretenden Beschädigungen nur das tatsächlich beschädigte Führungsteil 29 ausgetauscht werden muß. Die sich dabei erhöhende Anzahl von Führungsteilen 29 ermöglicht jedoch bei schadensbedingtem Austausch, daß nur ein kleineres, weniger materialintensives und damit kostengünstigeres Führungsteil 29 ausgetauscht werden muß.

Das beschriebene erfindungsgemäße Führungsteil 29, die Kettenräder 22, 23 und die demontierbare Spitze 15 der Pflückwalzen 8 sind auch an Pflückern 2 einsetzbar, deren Pflückeinheiten 13 nur eine Pflückwalze und/oder nur eine Förderkette 7 aufweisen.

### Bezugszeichenliste

- 1: Trägerfahrzeug
- 2: Pflücker
- 3: Abteiler
- 4: Einzugsbereich
- 5: Erntegut
- 6: Querförderschnecke
- 7: Förderkette
- 8: Pflückwalze
- 9: Pflückspalt
- 10: Pflückspaltplatte
- 11: Pflückspaltplatte
- 12: Mitnahmeelement
- 13: Pflückeinheit
- 14: Pflückwalzenachse
- 15: Spitze
- 16: Hüllfläche
- 17: Gutleit- und Förderelemente
- 18: metallischer Kern
- 19: Grundkörper
- 20: Getriebe
- 21: Welle
- 22: Kettenrad
- 23: Kettenrad
- 24: Achse
- 25: Halter
- 26: Kettenspanneinrichtung
- 27: Druckfeder
- 28: Lager
- 29: Führungsteil
- 30: Schraubverbindung
- 31: Lauffläche
- 32: Aussparung
- 33: Verlängerung
- 34: Pfeilrichtung
- 35: Aussparung

- A: Spaltmaß
- FR: Fahrtrichtung

## Patentansprüche

1. Vorrichtung zum Ernten von stengeligem Erntegut, wie Mais oder dergleichen, mit wenigstens einer um Umlenkelemente (22, 23) umlaufenden Fördervorrichtung (7) zur Förderung des Erntegutes (5) entlang wenigstens einer ein- oder mehrteilig ausgeführten, einem mittels in Führungen (35) angeordneten Pflückspaltplatten (10, 11) verstellbaren Pflückspalt (9) zugeordneten Pflückwalze (8), wobei das Förderelement (7) der Fördervorrichtung ein mit einer in einem Führungsteil (32) laufenden Spanneinrichtung (26) versehenes Zugmittel, vorzugsweise eine Kette (7) ist die wenigstens teilweise von Führungselementen (29, 31) umgeben wird,
**dadurch gekennzeichnet,**
**daß** ein oder mehrere Führungsteile (29) wenigstens eine der Führungen (31, 32, 35) des Zugmittels (7), wenigstens einer der verstellbaren Pflückspaltplatten (10, 11) oder wenigstens einer Spanneinrichtung (26) aufnehmen und aus elastischem, schwingungsdämpfenden Material bestehen.

2. Vorrichtung zum Ernten von stengeligem Erntegut nach Anspruch 1,
**dadurch gekennzeichnet,**
**daß** das Führungsteil (29) einstückig ausgeführt ist und somit die Führungselemente (31) des Zugmittels (7), die Führung (35) wenigstens einer verstellbaren Pflückspaltplatte (10, 11) und die Führung (32) wenigstens einer Spanneinrichtung (26) aufnimmt.

3. Vorrichtung zum Ernten von stengeligem Erntegut nach einem oder mehreren der vorhergehenden Ansprüche, **dadurch gekennzeichnet,**
**daß** die Umlenkelemente (22, 23) wenigstens teilweise als aus elastischem, schwingungsdämpfenden Material bestehende Kettenräder ausgeführt sind.

4. Vorrichtung zum Ernten von stengeligem Erntegut nach Anspruch 3;
**dadurch gekennzeichnet,**
**daß** die Umlenkelemente (22, 23) vollständig aus elastischem, schwingungsdämpfenden Material bestehen, sodaß die, die Umlenkelemente (22, 23) durchsetzenden Achsen (24) oder Wellen (21) und ihnen zugeordnete Lager (28) vollständig von diesem elastischen, schwingungsdämpfenden Material umgeben sind.

5. Vorrichtung zum Ernten von stengeligem Erntegut nach einem oder mehreren der vorhergehenden Ansprüche, **dadurch gekennzeichnet,**
**daß** wenigstens eine Pflückwalze (8) eine demontierbare, die Pflückwalze (8) in Fahrtrichtung (FR) begrenzende Spitze (15) aufweist.

6. Vorrichtung zum Ernten von stengeligem Erntegut nach Anspruch 5,
**dadurch gekennzeichnet,**
**daß** die demontierbare Spitze (15) eine aus elastischem, schwingungsdämpfenden Material bestehende Hüllfläche (16) und einen metallischen Kern (18) zur Adaptierung an der Pflückwalze (8) aufweist.

7. Vorrichtung zum Ernten von stengeligem Erntegut nach einem oder mehreren der Ansprüche 5 oder 6, **dadurch gekennzeichnet,**
**daß** die Hüllfläche (16) der demontierbaren Spitze (15) aus elastischem, schwingungsdämpfenden Material bestehende Gutleit- und Förderelemente (17) aufweist.

8. Vorrichtung zum Ernten von stengeligem Erntegut nach einem oder mehreren der vorhergehenden Ansprüche, **dadurch gekennzeichnet,**
**daß** das elastische, schwingungsdämpfende Material ein gießbares Polyamid ist.

9. Vorrichtung zum Ernten von stengeligem Erntegut nach einem oder mehreren der vorhergehenden Ansprüche, **dadurch gekennzeichnet,**
**daß** das elastische, schwingungsdämpfende Material eine gehärtete Oberfläche und einen weichen Kern aufweisen kann.

## Claims

1. Apparatus for harvesting stalk-type crop material such as corn or the like, comprising at least one conveyor device (7) which passes around direction-changing elements (22, 23) for conveying the crop material (5) along at least one picking roller (8) which is made in one or more parts and which is associated with a picking gap (9) which is adjustable by means of picking gap plates (10, 11) arranged in guides (35), wherein the conveyor element (7) of the conveyor device is a pulling means which is provided with a tensioning device (26) moving in a guide portion (32), the pulling means preferably being a chain (7) which is surrounded at least in part by guide elements (29, 31), **characterised in that** one or more guide portions (29) accommodate at least one of the guides (31, 32, 35) of the pulling means (7), at least one of the adjustable picking gap plates (10, 11) or at least one tensioning device (26) and comprise elastic, vibration-damping material.

2. Apparatus for harvesting stalk-type crop material according to claim 1 **characterised in that** the guide portion (29) is made in one piece and thus accommodates the guide elements (31) of the pulling means (7), the guide (35) of at least one adjustable picking gap plate (10, 11) and the guide (32) of at least one tensioning device (26).

3. Apparatus for harvesting stalk-type crop material according to one or more of the preceding claims **characterised in that** the direction-changing elements (22, 23) are at least partially in the form of chain wheels comprising elastic, vibration-damping material.

4. Apparatus for harvesting stalk-type crop material according to claim 3 **characterised in that** the direction-changing elements (22, 23) completely consist of elastic, vibration-damping material so that the shafts (21) or axles (24) passing through the direction-changing elements (22, 23) and bearings (28) associated with the shafts or axles are completely surrounded by said elastic, vibration-damping material.

5. Apparatus for harvesting stalk-type crop material according to one or more of the preceding claims **characterised in that** at least one picking roller (8) has a dismantleable tip (15) which delimits the picking roller (8) in the direction of travel (FR).

6. Apparatus for harvesting stalk-type crop material according to claim 5 **characterised in that** the dismantleable tip (15) has an envelope surface (16) comprising elastic, vibration-damping material, and a metallic core (18) for adaptation to the picking roller (8).

7. Apparatus for harvesting stalk-type crop material according to one or more of claims 5 and 6 **characterised in that** the envelope surface (16) of the dismantleable tip (15) has material guide and conveyor elements (17) comprising elastic, vibration-damping material.

8. Apparatus for harvesting stalk-type crop material according to one or more of the preceding claims **characterised in that** the elastic, vibration-damping material is a mouldable polyamide.

9. Apparatus for harvesting stalk-type crop material according to one or more of the preceding claims **characterised in that** the elastic vibration-damping material can have a hardened surface and a soft core.

## Revendications

1. Dispositif pour la récolte de produits à tiges, tels que du maïs ou similaire, comportant au moins un dispositif de transport (7) qui se déplace sur des éléments de renvoi (22, 23) pour le transport du produit de récolte (5) le long d'au moins un tambour de cueillage (8), monobloc ou en plusieurs parties, associé à une fente de cueillage (9) réglable à l'aide de plaques de fente de cueillage (10, 11) montées dans des glissières (35), l'élément de transport (7) du dispositif de transport étant un moyen de traction muni d'un dispositif de tension (26), qui se déplace dans une partie de guidage (32), de préférence une chaîne (7), qui est au moins partiellement entourée d'éléments de guidage (29, 31), **caractérisé en ce qu'**une ou plusieurs parties de guidage (29) porte(nt) au moins une des glissières (31, 32, 35) du moyen de traction (7), d'au moins une des plaques de fente de cueillage (10, 11) réglables ou d'au moins un dispositif de tension (26) et est (sont) réalisée(s) en un matériau élastique amortissant les vibrations.

2. Dispositif pour la récolte de produits à tiges selon la revendication 1, **caractérisé en ce que** la partie de guidage (29) est réalisée d'une pièce et porte les éléments de guidage (31) du moyen de traction (7), la glissière (35) d'au moins une des plaques de fente de cueillage (10, 11) réglables et la glissière (32) d'au moins un dispositif de tension (26).

3. Dispositif pour la récolte de produits à tiges selon une ou plusieurs des revendications précédentes, **caractérisé en ce que** les éléments de renvoi (22, 23) sont au moins partiellement conformés en pignons à chaîne, en matériau élastique, amortissant les vibrations.

4. Dispositif pour la récolte de produits à tiges selon la revendication 3, **caractérisé en ce que** les éléments de renvoi (22, 23) sont entièrement en matériau élastique, amortissant les vibrations, de sorte que les axes (24) ou les arbres (21) qui traversent lesdits les éléments de renvoi (22, 23), et les paliers (28) qui leur sont associés, sont entièrement entourés dudit matériau élastique, amortissant les vibrations.

5. Dispositif pour la récolte de produits à tiges selon une ou plusieurs des revendications précédentes, **caractérisé en ce que** le tambour de cueillage (8) au nombre d'au moins un comporte une pointe (15) démontable, qui délimite le tambour de cueillage dans la direction de déplacement (FR).

6. Dispositif pour la récolte de produits à tiges selon la revendication 5, **caractérisé en ce que** la pointe (15) démontable comporte une enveloppe (16) en matériau élastique, amortissant les vibrations, et un noyau (18) métallique pour le montage sur le tambour de cueillage (8).

7. Dispositif pour la récolte de produits à tiges selon une ou plusieurs des revendications précédentes, **caractérisé en ce que** l'enveloppe (16) de la pointe (15) démontable, en matériau élastique, amortissant les vibrations présente des éléments (17) de guidage et de transport du produit.

8. Dispositif pour la récolte de produits à tiges selon une ou plusieurs des revendications précédentes, **caractérisé en ce que** le matériau élastique, amortissant les vibrations, est un polyamide moulable.

9. Dispositif pour la récolte de produits à tiges selon une ou plusieurs des revendications précédentes, **caractérisé en ce que** le matériau élastique, amortissant les vibrations, peut présenter une surface durcie et un coeur souple.
